(19) Europäisches Patentamt
European Patent Office
Office européen des brevets

(11) **EP 3 893 351 A1**

(12) **EUROPÄISCHE PATENTANMELDUNG**

(43) Veröffentlichungstag:
**13.10.2021 Patentblatt 2021/41**

(51) Int Cl.:
***H02J 3/40*** *(2006.01)*

(21) Anmeldenummer: **20168873.6**

(22) Anmeldetag: **09.04.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Wobben Properties GmbH**
**26607 Aurich (DE)**

(72) Erfinder:
• **Johannes, Brombach**
**13437 Berlin (DE)**
• **Mackensen, Ingo**
**26607 Aurich (DE)**
• **Stelmaszek, Florian**
**49205 Hasbergen (DE)**

(74) Vertreter: **Eisenführ Speiser**
**Patentanwälte Rechtsanwälte PartGmbB**
**Postfach 10 60 78**
**28060 Bremen (DE)**

(54) **VERFAHREN ZUM EINSPEISEN ELEKTRISCHER LEISTUNG IN EIN ELEKTRISCHES VERSORGUNGSNETZ**

(57)     Die Erfindung betrifft ein Verfahren zum Einspeisen elektrischer Leistung in ein elektrisches Versorgungsnetz (120) an einem Netzanschlusspunkt (118) mittels eines umrichtergeführten Einspeisers, insbesondere mittels eines Windenergiesystems (100, 112), wobei der Netzanschlusspunkt (118) an einem Netzabschnitt des elektrischen Versorgungsnetzes (120) angeordnet ist und die elektrische Leistung über den Netzanschlusspunkt (118) in den Netzabschnitt eingespeist wird, das elektrische Versorgungsnetz (120) eine Netzspannung mit einer Netzfrequenz und einem mit der Netzfrequenz umlaufendem Netzphasenwinkel ($\varphi_U$) aufweist und durch eine Netznennfrequenz gekennzeichnet ist, das Einspeisen mittels eines Umrichters (105) erfolgt, der Umrichter (105) einen Umrichterausgang zum Abgeben eines Ausgangsstromes aufweist, und der Umrichter (105) stromprägend arbeitet, wobei das Einspeisen so erfolgt, dass ein Einspeisestrom von dem Umrichter (105) erzeugt wird mit einem mit der Netzfrequenz (f) umlaufenden Einspeisephasenwinkel ($\varphi_I$), zum Steuern des Einspeisephasenwinkels ($\varphi_I$) ein mit der Netzfrequenz (f) umlaufender Führungswinkel ($\varphi_L$) vorgegeben wird, wobei der Führungswinkel ($\varphi_L$) einen vorgebbaren Vorhaltewinkel ($\varphi_V$) in Bezug auf den Netzphasenwinkel ($\varphi_U$) aufweist, so dass der Führungswinkel ($\varphi_L$) dem Netzphasenwinkel ($\varphi_U$) um den Vorhaltewinkel ($\varphi_V$) nacheilt, und der Einspeisephasenwinkel ($\varphi_I$) dem Führungswinkel ($\varphi_L$) mit einer Verzögerungsdynamik nachgeführt wird, wobei die Verzögerungsdynamik so ausgebildet ist, dass im stationären Betrieb, wenn der Führungswinkel ($\varphi_L$) und der Netzphasenwinkel ($\varphi_U$) gleichförmig mit der Netzfrequenz umlaufen, ein Differenzwinkel ($\varphi_\Delta$) zwischen dem Einspeisephasenwinkel ($\varphi_I$) und dem Führungswinkel auf null ausgeregelt wird, und der Einspeisephasenwinkel ($\varphi_I$) in einem transienten Betrieb, wenn sich eine zeitliche Ableitung des Führungswinkels ($\varphi_L$) ändert, dem Führungswinkel mit einer veränderlichen Abweichung nachgeführt wird.

Fig. 3

**Beschreibung**

Die vorliegende Erfindung betrifft ein Verfahren zum Einspeisen elektrischer Leistung in ein elektrisches Versorgungsnetz. Die Erfindung betrifft auch einen umrichtergeführten Einspeiser, insbesondere ein Windenergiesystem, zum Durchführen eines solchen Verfahrens. Ein Windenergiesystem kann dabei eine einzelne Windenergieanlage, oder einen mehrere Windenergieanlagen aufweisenden Windpark bezeichnen.

Windenergieanlagen sind bekannt. Sie speisen elektrische Leistung aus Wind in ein elektrisches Versorgungsnetz ein. Häufig werden mehrere Windenergieanlagen in einem Windpark zusammengefasst. Windenergieanlagen werden zunehmend auch zur Stützung des elektrischen Versorgungsnetzes verwendet. Bisherige Netzregelungsstrategien und Netzbetriebsführungsstrategien sind überwiegend auf die physikalischen Eigenschaften konventioneller Einspeiser, nämlich insbesondere große Kraftwerksblöcke mit Synchronmaschinen, ausgerichtet. Windenergieanlagen können oder müssen zukünftig Aufgaben solcher konventioneller Einspeiser übernehmen. Die bisherige Netzregelungsstrategie und Netzbetriebsführungsstrategie kann dabei gegebenenfalls nicht mehr angemessen sein, oder sollte zumindest überarbeitet oder angepasst werden.

In elektrischen Versorgungsnetzen mit einer hohen Umrichterpenetration werden unter Umständen spannungsprägende leistungselektronische Einspeiser benötigt. Nahezu alle leistungselektronisch gekoppelten Einspeiser speisen heutzutage einen Strom in das elektrische Versorgungsnetz ein, arbeiten also stromprägend. Dabei kann eine spannungsabhängige Blindleistungsregelung implementiert sein und eine frequenzabhängige Wirkleistungsregelung, bzw. es kann eine Phasenwinkelregelung vorgesehen sein. Allerdings kann schon heute davon ausgegangen werden, dass nur ein kleiner Prozentsatz dieser Einspeiser wirklich die Spannung und Phase instantan festhalten muss. Also nur ein kleiner Anteil muss eine von der Blindleistung abhängige Spannungsregelung und eine von der Wirkleistung abhängige Frequenzregelung durchführen. Trotz des Bedarfs an spannungsprägenden leistungselektronischen Einspeisern werden also nur wenige umrichtergeführte Einspeiser tatsächlich mit einer spannungsprägenden Funktionsweise ausgestattet werden müssen.

Besonders wurde erkannt, dass spannungsprägende leistungselektronische Einspeiser zwar gute Stützeigenschaften aufweisen können, dafür aber in Situationen, in denen es auf eine Stützung nicht ankommt, nicht optimal sind. Das bedeutet, dass solche spannungsprägenden leistungselektronischen Einspeiser häufig die meiste Zeit ihres Betriebs über nicht optimal arbeiten, denn die geforderte oder benötigte Stützfunktion kommt im Regelfall nur selten zum Einsatz.

Aus dem Dokument WO 2017/129749 A1 ist ein Verfahren zum Einspeisen elektrischer Leistung in ein elektrisches Versorgungsnetz bekannt, das ein elektrisches Versorgungsnetz stützen kann. Dort wird mithilfe eines Referenzsystems ein Referenzwinkel mit Referenzfrequenz vorgegeben, wobei das Referenzsystem dem Verhalten der Netzspannung verzögert nachgeführt wird, um dadurch ähnliche Effekte wie bei einem direkt gekoppelten Synchrongenerator zu erzeugen. Die Lösung dieses genannten Dokumentes gibt aber eine Ausgangsspannung vor und arbeitet spannungsprägend. Es können somit durch die Verwendung dieses spannungsprägenden Verfahrens bzw. der entsprechend spannungsprägend arbeitenden Windenergieanlage gewünschte Stützeffekte erreicht werden, aber zu dem Preis, dass spannungsprägend gearbeitet werden muss.

Spannungsprägend zu arbeiten, also spannungsprägend einzuspeisen, kann, jedenfalls wenn dazu ein Umrichtersystem verwendet wird, folgende Nachteile haben. Besonders bei einer permanenten Spannungsprägung muss das Umrichtersystem und der elektrische Triebstrang einer Windenergieanlage für eventuell auftretende transiente Leistungsanforderungen, die sich durch die spannungsprägende Einspeisung ergeben kann, überdimensioniert werden. Das kann dadurch erklärt werden, dass durch das spannungsprägende Einspeisen die Spannung auch der Phase nach vorgegeben wird und auch versucht wird, diese zu halten. Dadurch wird auch die Spannungsphase gehalten. Das wird bereits zu Beginn, also wenn eine Phase, was auch als Phasenlage bezeichnet werden kann, sich zu ändern beginnt, versucht. Das kann auch als initiales Festhalten der Phase bezeichnet werden. Um die Phase festzuhalten, muss viel Regelenergie aufgebracht werden, was sich als unmittelbarer Leistungsaustausch bemerkbar macht. Das initiale Festhalten der Phase führt somit zu einem unmittelbaren Leistungsaustausch. Um das realisieren zu können, muss die genannte Überdimensionierung vorgenommen werden.

Neben der notwendigen Überdimensionierung entstehen auch zusätzliche Verluste, da jede noch so kleine Änderung im Netz gedämpft wird und es zu einem Anstieg des Leistungsaustausches mit dem Netz kommt bei weitestgehend gleich bleibender eingespeister Energie.

Der vorliegenden Erfindung liegt somit die Aufgabe zugrunde, zumindest eines der oben genannten Probleme zu adressieren. Insbesondere soll eine Lösung vorgeschlagen werden, bei der spannungsprägende Eigenschaften leistungselektronischer Einspeiser genutzt werden können, wobei Nachteile spannungsprägender leistungselektronischer Einspeiser möglichst vermieden werden sollen. Zumindest soll zu bisher bekannten Lösungen eine alternative Lösung vorgeschlagen werden.

Erfindungsgemäß wird ein Verfahren gemäß Anspruch 1 vorgeschlagen. Dieses Verfahren zum Einspeisen elektrischer Leistung speist somit an einem Netzanschlusspunkt in ein elektrisches Versorgungsnetz ein. Dies erfolgt mittels eines umrichtergeführten Einspeisers, insbesondere mittels eines Windenergiesystems. Ein umrichtergeführter Einspeiser kann auch synonym als umrichterbasierter Einspeiser oder als einen Umrichter verwendender Einspeiser bezeichnet werden. Es ist ein Einspeiser, der ausschließlich oder zumindest überwiegend unter Verwendung eines Frequenzumrichters oder eines Frequenzwechselrichters in das elektrische Versorgungsnetz einspeist. Für Windenergieanlagen fällt darunter ein Vollumrichterkonzept als auch das Einspeisen mittels einer doppeltgespeisten Asynchronmaschine, was auch als DFIG bezeichnet wird. Unter einem Windenergiesystem wird hier sowohl eine einzelne Windenergieanlage als auch ein Windpark mit mehreren Windenergieanlagen zusammengefasst. Das Einspeisen erfolgt also mittels einer Windenergieanlage oder eines Windparks, oder eines anderen umrichtergeführten Einspeisers.

Zudem ist der Netzanschlusspunkt an einem Netzabschnitt des elektrischen Versorgungsnetzes angeordnet und die elektrische Leistung wird über den Netzanschlusspunkt in den Netzabschnitt eingespeist. Es wird somit auch ein Netzabschnitt betrachtet, der bspw. durch einen Transformator oder einfach eine elektrische Verbindung an das restliche elektrische Versorgungsnetz angeschlossen sein kann und/oder an wenigsten einen weiteren Netzabschnitt angeschlossen sein kann. Insbesondere sind an den Netzabschnitt mehrere Einspeiser angeschlossen, mit einer kumulierten Nennleistung von wenigstens 10MW, insbesondere wenigstens 100MW. Insbesondere wird unter einem Netzabschnitt, der auch als lokaler Netzabschnitt bezeichnet werden kann, ein Abschnitt des elektrischen Versorgungsnetzes verstanden, der maximal die Größe von 10% des gesamten elektrischen Versorgungsnetzes beträgt. Diese Größe bezieht sich insbesondere auf die kumuliert eingespeiste, oder einspeisbare Wirkleistung des Netzabschnitts und des elektrischen Versorgungsnetzes.

Das elektrische Versorgungsnetz weist dabei eine Netzspannung mit einer Netzfrequenz und einem mit der Netzfrequenz umlaufenden Netzphasenwinkel auf. Das elektrische Versorgungsnetz ist zudem durch eine Netznennfrequenz gekennzeichnet, die insbesondere 50 Hz oder 60 Hz betragen kann. Jedes elektrische Versorgungsnetz, das eine elektrische Wechselspannung aufweist, mit im Wesentlichen sinusförmigem Verlauf, weist einen umlaufenden Netzphasenwinkel auf. Dieser kann beispielsweise in Bezug auf eine von drei Phasen des elektrischen Versorgungsnetzes definiert sein und so definiert sein, dass er den Wert null aufweist, wenn der Momentanwert der Spannung der betreffenden Phase einen positiven Nulldurchgang aufweist. Das wäre dann in Anlehnung an die Definition einer Sinusfunktion. Es kommt aber auch in Betracht, einen Phasenwinkel gemäß einer Transformation der drei Phasenspannungen des elektrischen Versorgungsnetzes in einem Netzsystem zugrunde zu legen. Hier kommt besonders die Methode der symmetrischen Komponenten in Betracht. Wichtig ist besonders, dass für die noch folgenden Phasenwinkel, besonders für den noch nachfolgend beschriebenen Einspeisephasenwinkel sinngemäß dieselbe Definition zugrunde gelegt wird. Insoweit ist hier wichtig, dass dieser Netzphasenwinkel der Orientierung der Einspeisung dient und insoweit bei der Beschreibung des Netzes und der Beschreibung des einzuspeisenden Stromes dieselbe Form der Beschreibung zu Grunde liegt.

Das Einspeisen erfolgt somit mittels eines Umrichters. Ein solcher Umrichter steht hier repräsentativ für einen Frequenzumrichter oder einen Wechselrichter, und auch für Anordnungen, die aus mehreren einzelnen Frequenzumrichtern oder Wechselumrichtern zusammengeschaltet sind. Insbesondere kommt in Betracht, dass ein solcher Umrichter als eine Umrichtereinheit ausgestaltet ist, in der mehrere Frequenzumrichter oder Wechselrichter parallelgeschaltet sind. Auch die Einspeisung mittels eines DFIG kommt in Betracht.

Wichtig ist hier auch, dass der Umrichter stromprägend arbeitet. Stromprägend zu arbeiten ist ein Fachbegriff und bedeutet, dass der Umrichter so arbeitet, dass er zur Einspeisung in Abhängigkeit einer externen Spannung einen Strom vorgibt. Beispielsweise kann dies mittels eines Toleranzbandverfahrens erfolgen, bei dem für den einzuspeisenden Strom ein Toleranzband vorgegeben wird. Der erzeugte Strom wird dann am Ausgang des Umrichters, gegebenenfalls auch am Ausgang einer dem Umrichter zugeordneten Netzdrossel, erfasst. Stößt dieser erfasste Strom dann an eine Grenze des Toleranzbandes, so löst dies im Umrichter einen Schaltvorgang aus, der dazu führt, dass der Strom in dem Toleranzband gehalten wird.

Das Einspeisen der elektrischen Leistung erfolgt zudem so, dass ein Einspeisestrom mit einem mit der Netzfrequenz umlaufenden Einspeisephasenwinkel von dem Umrichter erzeugt wird. Ein solcher Einspeisephasenwinkel kann beispielsweise als Referenzwinkel in einem Referenzsystem vorgegeben werden. Das Referenzsystem kann dafür mit der Netzfrequenz umlaufen, sodass der Referenzwinkel in dem Referenzsystem im Wesentlichen konstant ist, während der Einspeisephasenwinkel mit der Netzfrequenz umläuft, sich also ständig ändert. Die Netzfrequenz kann gemessen werden und wird üblicherweise auch ständig gemessen, um gegebenenfalls Netzstützaufgaben zu erfüllen. Beispielsweise kann abhängig von diesem Einspeisephasenwinkel bzw. entsprechend diesem Einspeisephasenwinkel das genannte Toleranzband vorgegeben werden, wenn ein Toleranzbandverfahren verwendet wird. Der Einspeisephasenwinkel kann aber auch anderweitig verwendet werden, um zum Beispiel anderweitig einen sinusförmigen Verlauf des einzuspeisenden Stroms vorzugeben. Besonders kann damit ein Stromzeiger als Raumzeiger für den einzuspeisenden Strom vorgegeben werden.

Zum Steuern des Einspeisephasenwinkels wird ein mit einer Netzfrequenz umlaufender Führungswinkel vorgegeben. Der Führungswinkel weist einen vorgebbaren Vorhaltewinkel in Bezug auf den Netzphasenwinkel auf, sodass der Führungswinkel dem Netzphasenwinkel um den Vorhaltewinkel nacheilt. Der Vorhaltewinkel wird also so vorgegeben, dass der Führungswinkel dem Netzphasenwinkel nacheilt.

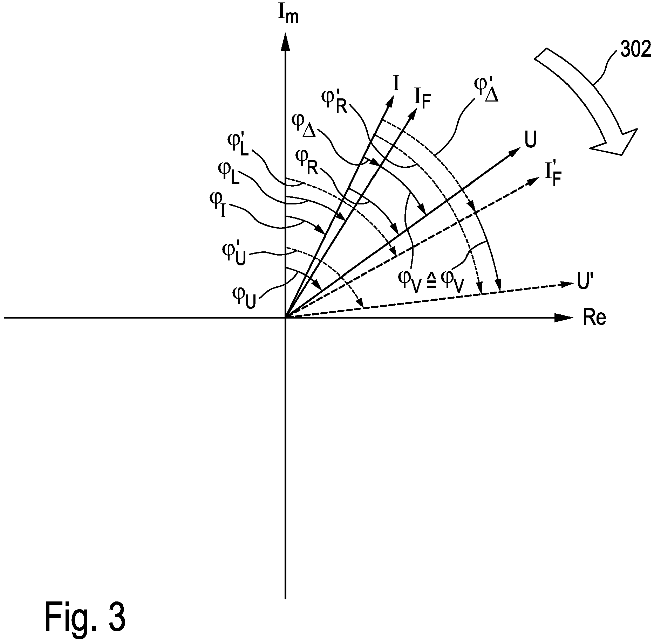

Der Vorhaltewinkel wird somit so gewählt, dass der Einspeiser übererregt einspeist. Die Zusammenhänge der genannten Winkel werden später beispielhaft anhand der Figur 3 erläutert. Die Beschreibung der Winkel orientiert sich, soweit es darauf überhaupt ankommt, am Erzeugerzählpfeilsystem. Das gilt generell, nicht nur für die Figur 3. Der Vorhaltewinkel wird dem Betrage nach maximal den Wert 90° annehmen, vorzugsweise beträgt er aber maximal 40°.

Die Situation könnte so beschrieben werden, dass die Netzspannung durch einen Spannungszeiger beschrieben wird, der mit der Netzfrequenz umläuft und der Einspeisestrom mit einem Stromzeiger beschrieben werden kann, der ebenfalls mit der Netzfrequenz umläuft. Zusätzlich kann noch ein Hilfszeiger beschrieben werden, der mit der Netzfrequenz umläuft und den Führungswinkel aufweist. Der Vorhaltewinkel beschreibt somit den Winkel zwischen dem Spannungszeiger und dem Hilfszeiger. Im idealen stationären Betrieb kann der Stromzeiger mit dem Hilfszeiger übereinstimmen.

Der Vorhaltewinkel kann also beispielsweise 20° betragen und der Führungswinkel wird dann dem Netzphasenwinkel ständig um diese 20° nacheilen, bzw. der Hilfszeiger eilt dem Spannungszeiger um diese 20° nach.

An diesem Führungswinkel orientiert sich der Einspeisephasenwinkel. Dazu wird der Einspeisephasenwinkel dem Führungswinkel mit einer Verzögerungsdynamik nachgeführt. Die Verzögerungsdynamik ist dabei so ausgebildet, dass im stationären Betrieb, wenn der Führungswinkel und der Netzphasenwinkel also gleichförmig mit der Netzfrequenz umlaufen, ein Differenzwinkel zwischen dem Einspeisephasenwinkel und dem Führungswinkel auf null ausgeregelt wird. In diesem stationären Betrieb stimmt der Einspeisephasenwinkel also mit dem Führungswinkel überein. Entsprechend eilt der Einspeisephasenwinkel dem Netzphasenwinkel um den Wert des Vorhaltewinkels nach.

Es wurde also erkannt, dass die Differenz aus Netzphasenwinkel und Führungswinkel den statischen Arbeitspunkt des Umrichters definiert. Der Führungswinkel stellt somit vereinfacht dargestellt die Stromreferenz eines Umrichters dar. Ändert sich die Spannung, Frequenz und/oder der Netzphasenwinkel, wird der Führungswinkel entsprechend angepasst.

In einem transienten Betrieb wird der Einspeisephasenwinkel dem Führungswinkel mit einer veränderlichen Abweichung nachgeführt. Ein transienter Betrieb liegt vor, wenn sich eine zeitliche Ableitung des Führungswinkels ändert, wenn der Führungswinkel also nicht mehr mit einer festen Frequenz gleichförmig umläuft. In diesem Fall läuft also auch der Netzphasenwinkel nicht mehr mit einer festen Netzfrequenz gleichförmig um. Das kann bedeuten, dass die Netzfrequenz sich verändert, und/oder das kann auch bedeuten, dass der Netzphasenwinkel springt.

Durch dieses verzögerte Nachführen im transienten Betrieb wird erreicht, dass der Unterschied zwischen dem Einspeisephasenwinkel und dem Netzphasenwinkel in diesem transienten Bereich zunächst dem Vorhaltewinkel entspricht. Hier wird also bewusst die Situation ausgenutzt, dass in diesem transienten Fall ein anderer Differenzwinkel zwischen Einspeisephasenwinkel und Netzphasenwinkel auftritt als im stationären Betrieb. Dieser kann, je nach Situation im Netz, größer oder kleiner sein als im stationären Betrieb.

Hier wurde erkannt, dass bei bestimmten Betriebsbedingungen stromprägende umrichterbasierte Einspeiser ein instantanes, netzstützendes Verhalten zeigen können. In einem solchen Fall wirken solche Umrichter dann wie spannungsprägende Umrichter. Mit dem vorgeschlagenen Verfahren kann dieser Effekt ausgenutzt werden.

Es wird somit vorgeschlagen, das beschriebene Phänomen zur instantanen Bereitstellung einer Momentanreserve und/oder einer Spannungseinprägung zu nutzen. Durch das Verfahren wird erreicht, dass die Umrichter für eine Frequenzstützung und/oder Spannungsprägung im übererregten Betrieb gefahren werden. Dieser übererregte Betrieb bedeutet, dass mehr Leistung bei einem Frequenzabfall und/oder bei einer Lastzuschaltung bereitgestellt wird. Dieser übererregte Betrieb bedeutet, dass der Führungswinkel so eingestellt wird, dass der Einspeisestrom der Netzspannung nacheilt. Entsprechend eilt also auch der Führungswinkel dem Netzphasenwinkel nach. Das kann auch so bezeichnet werden, dass der Führungswinkel kleiner als der Netzphasenwinkel gewählt wird.

Tritt nun eine Lastzuschaltung im elektrischen Versorgungsnetz auf, erhöht sich also sprunghaft der Leistungsverbrauch, kann es zu einem negativen Phasensprung der Netzspannung kommen. Der Netzphasenwinkel kann sich also sprunghaft um einen negativen Wert verändern. Der Netzphasenwinkel springt damit quasi dem aktuellen Einspeisephasenwinkel entgegen. Dadurch verringert sich der Differenzwinkel zwischen dem Einspeisephasenwinkel und dem Netzphasenwinkel und das führt dazu, dass sich der Blindleistungsanteil verringert und der Wirkleistungsanteil erhöht, nämlich ebenso sprunghaft.

Somit ergibt sich eine instantane Wirkleistungserhöhung, was auch eine ähnliche Wirkung wie eine instantane Momentanreserve hat.

Mit dem Sprung des Netzphasenwinkels springt dann auch der Führungswinkel, da er relativ zu dem Netzphasenwinkel festgelegt ist. Der Führungswinkel kann im Wesentlichen auch ohne Weiteres springen, da er eine reine Rechengröße ist. Tatsächlich wird er aber auch abhängig von Messungen und über eine Regelungsdynamik verändert. So muss besonders erst der genannte Sprung des Netzphasenwinkels messtechnisch erkannt werden und der Führungswinkel dem gesprungenen Netzphasenwinkel nachgeführt werden. Eine Führungswinkeldynamik kann als Dynamik definiert sein, mit der der Führungswinkel auf einen Sprung des Netzphasenwinkels reagiert, und diese Führungswinkeldynamik kann eine Hochlaufzeitkonstante aufweisen.

Diese Hochlaufzeitkonstante kann wie für ein PT1-Glied definiert werden, nämlich als die Zeit, die der Führungswinkel benötigt, um dem Sprung des Netzphasenwinkels auf 63% zu folgen. Bei gleicher Definition einer Hochlaufzeitkonstanten für die Verzögerungsdynamik, also die Zeit, in der eine Sprungantwort des Einspeisephasenwinkels 63% des Sprungs erreicht, wird vorgeschlagen, dass die Hochlaufzeitkonstante der Verzögerungsdynamik wenigstens um den Faktor 5, insbesondere wenigstens um den Faktor 10 größer ist als die Hochlaufzeitkonstante der Führungswinkeldynamik. Die Verzögerungsdynamik, mit der der Einspeisewinkel dem Führungswinkel verzögert nachgeführt wird, ist somit wesentlich langsamer, als die Führungswinkeldynamik. Vorzugsweise kann die Führungswinkeldynamik vernachlässigt werden. Der Einspeisephasenwinkel wird dem Führungswinkel nämlich bewusst verzögert nachgeführt, sodass der beschriebene Effekt der sprunghaften Erhöhung der Wirkleistung gehalten werden kann. Durch die beschriebene Lastzuschaltung verändert sich somit der Differenzwinkel zwischen dem Netzphasenwinkel und dem Einspeisephasenwinkel, das führt zu einem vorteilhaften Effekt und daher wird dieser veränderte Differenzwinkel eine Zeit lang gehalten, bzw. nur verzögert auf den früheren Wert zurückgeführt. Der vorteilhafte Effekt wird dadurch besser ausgenutzt.

Besonders wird vorgeschlagen, dass die Verzögerungsdynamik eine Hauptzeitkonstante im Bereich von 5 ms bis 100 ms aufweist. Besonders kann die Zeitkonstante im Sinne eines Verzögerungsgliedes erster Ordnung definiert sein und/oder als die Zeit definiert sein, bei der nach einem Phasensprung des Netzphasenwinkels der Differenzwinkel zwischen dem Einspeisephasenwinkel und dem Führungswinkel durch die Verzögerungsdynamik um 63 % verringert ist. Insoweit entspräche die Hauptzeitkonstante der vorstehend vorgeschlagenen Hochlaufzeitkonstanten der Verzögerungsdynamik.

Gemäß einer Ausführungsform wird vorgeschlagen, dass der Vorhaltewinkel der Größe nach in Abhängigkeit von wenigstens einem Netzzustand vorgegeben wird.

Als Netzzustand wird vorgeschlagen, eine lokale Umrichterpenetration zu berücksichtigen. Auch eine Anlaufzeitkonstante des Netzabschnitts kann als Netzzustand berücksichtigt werden. Insbesondere wird vorgeschlagen, dass der Vorhaltewinkel umso größer gewählt wird, je größer die lokale Umrichterpenetration ist, und/oder je kleiner die Anlaufzeitkonstante des Netzabschnitts ist. Dazu finden sich unten noch Erläuterungen.

Gemäß einer Ausführungsform wird vorgeschlagen, dass der Vorhaltewinkel gemäß wenigstens einer der folgenden Vorschriften, nämlich einer der folgenden Einstellvorschriften eingestellt wird.

Als eine Einstellvorschrift wird vorgeschlagen, dass der Vorhaltewinkel umso höher eingestellt wird, je größer eine lokale Umrichterpenetration ist.

Es wurde erkannt, dass sich durch eine hohe Umrichterpenetration eine Selbststabilisierung des elektrischen Versorgungsnetzes bzw. des betreffenden Netzabschnitts, wie sie sich besonders durch physikalische Eigenschaften direkt gekoppelter Synchrongeneratoren ergibt, verringert und dem durch die Einstellung des Vorhaltewinkels entgegengewirkt werden kann. Ausgleichswirkungen, die durch die Physik eines direkt gekoppelten Synchrongenerators auftreten und entsprechende Stabilisierungen des elektrischen Versorgungsnetzes erreichen, sind daher in einem Netzabschnitt mit hoher Umrichterpenetration weniger stark oder gar nicht vorhanden.

Je größer der Vorhaltewinkel gewählt ist, umso größer ist auch im stationären Betrieb der Differenzwinkel zwischen Netzphasenwinkel und Einspeisephasenwinkel. Aufgrund des nichtlinearen, nämlich sinusförmigen Zusammenhangs zwischen Differenzwinkel und Wirkleistungsanteil führt ein Phasensprung gleicher Winkelamplitude bei größerem Differenzwinkel somit zu einem größeren Effekt für Wirkleistung. Springt der Differenzwinkel z.B. von 30° auf 25°, so ist die Auswirkung auf die Wirkleistung größer, als wenn er von 10° auf 5° springt.

Eine lokale Umrichterpenetration bezeichnet das Verhältnis der durch alle an den Netzabschnitt angeschlossenen umrichtergeführten Einspeiser eingespeisten Wirkleistung zu der insgesamt in den Netzabschnitt bzw. lokalen Netzabschnitt eingespeisten Wirkleistung.

Eine hohe lokale Umrichterpenetration liegt vor, wenn die durch alle an den Netzabschnitt angeschlossenen umrichtergeführten Einspeiser eingespeiste Wirkleistung wenigstens 50%, insbesondere wenigstens 70% der insgesamt in den Netzabschnitt bzw. lokalen Netzabschnitt eingespeisten Wirkleistung beträgt.

Als eine Einstellvorschrift wird vorgeschlagen, dass der Vorhaltewinkel umso größer gewählt wird, je kleiner eine mittlere Anlaufzeitkonstante des Netzabschnitts ist.

Eine Anlaufzeitkonstante bezeichnet die Zeit, die ein in das elektrische Versorgungsnetz einspeisender Einspeiser hypothetisch zum Anlaufen, also Starten benötigt. Die Anlaufzeitkonstante ist eine typische Eigenschaft eines Einspeisers, insbesondere des verwendeten Generators. Eine Anlaufzeitkonstante eines Kraftwerks mit Generator ist die Zeit, welche der Generator bei Nennmoment bräuchte, um die Nenndrehzahl zu erreichen (oder umgekehrt mit dem Nennmoment von Nenndrehzahl abgebremst wird, bis die Drehzahl null ist). Die Anlaufzeitkonstante von rotierenden Lasten wird genauso ermittelt.

Die mittlere Anlaufzeitkonstante des Netzabschnitts ist somit das arithmetische Mittel der einzelnen gewichteten Anlaufzeitkonstanten, die jeweils entsprechend der einspeisbaren Leistung des betreffenden Einspeisers gewichtet sind. Bei bspw. nur zwei Windenergieanlagen mit einer ersten Anlaufzeitkonstanten von 2 Sekunden einer 1MW Windenergieanlage und einer zweiten Anlaufzeitkonstanten von 4 Sekunden einer 2MW Windenergieanlage ergibt sich somit aus den gewichteten Zeitkonstanten eine gesamte Zeitkonstante $T_{ges}$:

$$Tges \ = 2s*1MW/(1MW+2MW)+4s*2MW/(1MW+2MW)= (2/3+8/3)s = 10/3s = 3,33s$$

Es wurde erkannt, dass umrichtergeführte Einspeiser sehr schnelle Einheiten sind, die vergleichsweise schnell hochlaufen. Wegen der Entkopplung über einen Umrichter haben sie keine wirksame Anlaufzeitkonstante im Sinne obiger Definition. Ihre Anlaufzeitkonstante kann daher idealisierend als 0 angenommen werden, zumindest ist sie sehr klein.

Somit ist eine kleine mittlere Anlaufzeitkonstante auch ein Indiz für einen großen Anteil umrichtergeführter Einspeiser im entsprechenden Netzabschnitt. Bei einer kleinen mittleren Hochlaufzeitkonstanten ist somit der Einfluss von einem direkt gekoppelten Synchrongenerator, oder mehreren, gering, sodass diese Stützwirkung durch die umrichtergeführten Einspeiser zumindest teilweise übernommen werden kann und entsprechend wird, um das zu realisieren, der Vorhaltewinkel umso größer gewählt, je kleiner die mittlere Anlaufzeitkonstante ist. Wobei der Vorhaltewinkel auch hierbei so gewählt wird, dass der Führungswinkel dem Netzphasenwinkel nacheilt.

Vorzugsweise wird vorgeschlagen, dass der Vorhaltewinkel erst dann in Abhängigkeit von der mittleren Anlaufzeitkonstanten gewählt wird, nämlich umso größer, je kleiner die Zeitkonstante ist, wenn die mittlere Anlaufzeitkonstante einen vorbestimmten Grenzwert der mittleren Anlaufzeitkonstanten unterschreitet. Der vorbestimmte Grenzwert liegt vorzugsweise im Bereich von 0,5 - 4 s. Es wurde erkannt, dass erst unter diesen Werten die Dominanz direkt gekoppelter Synchrongeneratoren so stark nachlässt, dass mit der Wahl eines Vorhaltewinkels einem verringerten Stützeffekt entgegengewirkt zu werden braucht.

Es wurde zudem erkannt, dass die Anlaufzeitkonstante des Netzabschnitts ein Maß für eine Umrichterpenetration sein kann, wobei die Umrichterpenetration umso größer ist, je kleiner die Anlaufzeitkonstante ist. Mit anderen Worten ist der Netzabschnitt umso schneller, je größer der Anteil der umrichtergeführten Einspeiser ist.

Als eine Einstellvorschrift wird vorgeschlagen, dass, wenn der Netzabschnitt eine Exportzone oder Importzone bildet, der Vorhaltewinkel um wenigstens einen Grad höher eingestellt wird als wenn der Netzabschnitt keine Exportzone bzw. keine Importzone bildet.

Der Netzabschnitt bildet eine Exportzone, wenn in ihn mehr Wirkleistung eingespeist wird als von angeschlossenen Verbrauchern entnommen wird. Es wird also überschüssige Wirkleistung in den Rest des elektrischen Versorgungsnetzes exportiert, insbesondere in benachbarte Netzabschnitte.

Eine Exportzone liegt aber erst dann vor, wenn das Verhältnis der Wirkleistung, die in den betreffenden Netzabschnitt eingespeist wird, zu der Wirkleistung, die von angeschlossenen Verbrauchern entnommen wird, einen vorbestimmten Grenzwert überschreitet, insbesondere größer als 1,1 ist. Der Anteil exportierter Leistung muss also signifikant sein.

Für den Fall, dass der Netzabschnitt eine Exportzone bildet, wurde besonders erkannt, dass in einem solchen Fall eine potentielle Stützleistung durch einen höheren Vorhaltewinkel vorteilhaft ist, um im Falle einer Abtrennung des Netzabschnitts auf die zusätzliche Leistung zu reagieren, die durch die sprunghaft nicht mehr exportierbare Leistung weniger erzeugt werden sollte.

Besonders im Fall einer fehlerbedingten Trennung des Netzabschnitts vom Rest des elektrischen Versorgungsnetzes kann es zu einem positiven Sprung des Netzphasenwinkelsprungs kommen, also in Richtung des Umlaufs des Netzphasenwinkels.

Es stellt sich dann ein vergrößerter Winkel zwischen dem Einspeisephasenwinkel und dem Netzphasenwinkel ein, der auch als Reaktionsphasenwinkel bezeichnet werden kann. Dieser Reaktionsphasenwinkel beschreibt dabei den Winkel zwischen eingespeistem Strom und der Netzspannung. Der Reaktionsphasenwinkel bestimmt somit die Aufteilung zwischen Wirk- und Blindstrom bzw. Wirk- und Blindleistung. Der Leistungsfaktor $\cos(\phi)$ bezieht sich auf ihn. Deswegen ist es auch wichtig, dass der Umrichter stromprägend arbeitet.

Der größere Reaktionswinkel führt somit zu einer Erhöhung des Blindleistungsanteils und zu einer Verringerung des Wirkleistungsanteils. Durch die Verzögerungsdynamik wird dieser Effekt für eine Zeit gehalten, die sich durch die Wahl der Verzögerungsdynamik ergibt.

Die Wahl des Vorhaltewinkels führt somit zu einer instantanen Verringerung der eingespeisten Wirkleistung, wenn ein positiver Phasensprung auftritt. Das wird auch als negative Stützleistung bezeichnet.

Tritt nämlich eine Abtrennung des Netzabschnitts vom Rest des elektrischen Versorgungsnetzes auf, insbesondere von wenigstens einem benachbarten Netzabschnitt, wenn der betrachtete Netzabschnitt eine Exportzone bildet, so führt das zu einem sofortigen Leistungsüberschuss. Das kann zudem zu einem positiven Phasensprung des Netzphasenwinkels führen. Darauf reagiert der Umrichter, wenn ein nacheilender Vorhaltewinkel eingestellt ist, mit einem vergrößerten Reaktionswinkel und damit mit einer Verringerung der eingespeisten Leistung. Die überschüssige Leistung wird somit instantan durch einen stromprägenden Umrichter verringert.

Für den Fall, dass der Netzabschnitt eine Exportzone bildet, wurde somit erkannt, dass es in einem speziellen Fall sinnvoll ist, besonders auch bei einer hohen lokalen Umrichterpenetration, den Vorhaltewinkel etwas größer zu wählen, als wenn der betrachtete Netzabschnitt keine Importzone bildet.

Der Netzabschnitt bildet eine Importzone, wenn in ihn weniger Wirkleistung eingespeist wird als von angeschlossenen Verbrauchern entnommen wird. Es wird also zusätzliche Wirkleistung von dem Rest des elektrischen Versorgungsnetzes erhalten, also importiert, insbesondere aus benachbarten Netzabschnitten. Eine Importzone liegt aber erst dann vor, wenn das Verhältnis der Wirkleistung, die in den betreffenden Netzabschnitt eingespeist wird, zu der Wirkleistung, die von angeschlossenen Verbrauchern entnommen wird, einen vorbestimmten Grenzwert unterschreitet, insbesondere kleiner als 0,9 ist. Der Anteil importierter Leistung muss also signifikant sein.

Der dem Netzphasenwinkel nacheilende Führungswinkel führt somit zu folgendem Effekt. Tritt eine Abtrennung des Netzabschnitts auf, kann es wieder zu einem negativen Sprung des Netzphasenwinkels kommen, der in diesem Fall aber zu einer betragsmäßigen Verringerung des Winkels zwischen Netzphasenwinkel und Führungswinkel führt, also zu einer Verringerung des Reaktionswinkels. Dadurch nimmt der Blindleistungsteil ab und der Wirkleistungteil zu. Der durch die Abtrennung plötzlich auftretende Leistungsbedarf kann somit instantan zumindest teilweise gedeckt werden. Das wird auch als positive Stützleistung bezeichnet.

Als eine Einstellvorschrift wird der Vorhaltewinkel in Abhängigkeit von der Netzfrequenz eingestellt. Es wurde erkannt, dass der Stützbetrieb in seiner Quantität in Abhängigkeit von der Netzfrequenz eingestellt wird. Es kommt hierbei auch in Betracht, dass der Stützbetrieb immer aktiviert ist, der Vorhaltewinkel aber in Abhängigkeit von der Netzfrequenz ausgewählt wird, also variieren kann. Es kommt aber auch in Betracht, dass zunächst überhaupt entschieden wird, ob ein Stützbetrieb aktiviert wird und dann in einem logischen zweiten Schritt der Vorhaltewinkel in Abhängigkeit von der Netzfrequenz eingestellt wird.

Hier liegt besonders der Gedanke zugrunde, dass das elektrische Versorgungsnetz in der Nähe der Nennfrequenz eher stabiler arbeitet als wenn die Netzfrequenz stark von der Nennfrequenz abweicht. Das kann durch die Wahl der Größe des Vorhaltewinkels adressiert werden.

Insbesondere wird vorgeschlagen, dass der Vorhaltewinkel dem Betrag nach umso größer gewählt wird, je weiter die Netzfrequenz über einer Netznennfrequenz liegt, oder über einer ersten oberen Netzgrenzfrequenz liegt, die einen oberen Frequenzwert eines um die Netznennfrequenz liegenden Unempfindlichkeitsbereichs kennzeichnet.

Je höher die Netzfrequenz ist, umso größer wird also der Vorhaltewinkel gewählt. Dabei kann aber vorgesehen sein, dass in einem Unempfindlichkeitsbereich der Vorhaltewinkel den Wert null erhält oder zumindest nicht verändert wird, aber mit steigender Frequenz erhöht wird, sobald die Frequenz den Unempfindlichkeitsbereich verlassen, also überschritten hat.

Auch hier wird der Umstand berücksichtigt, dass eine hohe Frequenz bei einem Lastabfall zu einer noch höheren Frequenz führen kann und somit einem solchen Sprung durch das vorgeschlagene Verfahren entgegengewirkt werden soll.

Als eine Einstellvorschrift wird somit vorgeschlagen, dass der Vorhaltewinkel umso größer gewählt wird, je höher die Netzfrequenz oberhalb eines vorbestimmten oberen Frequenzgrenzwertes liegt.

Die Netzfrequenz und die Änderung der Netzfrequenz sind insoweit weitere Zustände des Netzes. Sie können Aufschluss über ein aktuelles Netzverhalten geben, auf das sich der Einspeiser durch die Wahl des Vorhaltewinkels einstellen kann. Es wird vorgeschlagen, die Größe, also den konkreten Wert des Vorhaltewinkels davon abhängig einzustellen.

Es wurde berücksichtigt, dass eine höhere Netzfrequenz einen Hinweis auf ein Leistungsungleichgewicht im Netz sein kann, dem regelmäßig durch eine Wirkleistungsanpassung begegnet wird. Dazu wurde erkannt, dass die Veränderung des Vorhaltewinkels zwar eine Wirkleistungsverringerung ist, dadurch aber eine instantane Wirkleistungsreaktion zur Stützung ermöglicht wird.

Als eine Einstellvorschrift wird vorgeschlagen, dass der Vorhaltewinkel umso größer gewählt wird, je weiter die Netzfrequenz unterhalb eines vorbestimmten unteren Frequenzgrenzwertes liegt.

Es wird somit vorgeschlagen, dass der Vorhaltewinkel dem Betrage nach umso größer gewählt wird, je weiter die Netzfrequenz unter einer Netznennfrequenz liegt, oder unter dem unteren Frequenzgrenzwert, der einen unteren Frequenzwert eines um die Netznennfrequenz liegenden Unempfindlichkeitsbereichs kennzeichnet.

Eine positive Stützung durch die Wahl eines übererregten Betriebs ist bereits beschrieben worden. Es wurde erkannt, dass auch ab einer bestimmten Frequenzabweichung unterhalb der Netznennfrequenz und/oder ab einem vorgebbaren Gradientengrenzbetrag eines Frequenzgradienten abfallender Frequenz die Stützung durch einen übererregten Betrieb vorteilhaft aktiviert werden kann. Hier wurde zusätzlich erkannt, dass sich ein Synergieeffekt ergibt, demnach eine fehlende Spannungsstützung, die sich durch die langsamer laufenden Generatoren ergibt, durch die vorgeschlagene Maßnahme zumindest teilweise ausgleichen lässt.

Beispielsweise kann ein Kraftwerksausfall auftreten, es kann auch ein anderer Leitungsausfall sein, sodass sich ein Leistungsdefizit ergibt. Als Folge fällt die Frequenz ab. Daher wird auch hier vorgeschlagen, den Vorhaltewinkel so zu wählen, dass der Führungswinkel dem Netzphasenwinkel nacheilt. Durch die abfallende Frequenz holt der anfangsnacheilende Führungswinkel den Netzphasenwinkel ein, sodass der Blindleistungsanteil der eingespeisten Leistung fällt und der Wirkleistungsanteil steigt.

Als eine Einstellvorschrift wird vorgeschlagen, dass der Vorhaltewinkel umso größer gewählt wird, je größer eine Änderung der Netzfrequenz ist, sobald sie dem Betrage nach oberhalb einer vorbestimmten oberen Frequenzänderungsgrenze liegt. Auch hier wurde erkannt, dass durch geeignete Wahl des Vorhaltewinkels ein instantanes Stützpotential durch Wirkleistung vorgehalten werden kann, das umso nötiger gebraucht wird, umso schneller sich die Frequenz ändert, also umso größer die Frequenzänderung ist.

Als eine Einstellvorschrift wird vorgeschlagen, dass der Vorhaltewinkel umso größer gewählt wird, je größer eine Netzsensitivität ist, sobald sie oberhalb eines Sensitivitätsgrenzwertes liegt.

Dabei ist die Netzsensitivität das Verhältnis einer Änderung einer Netzgröße, insbesondere der Netzfrequenz oder der Netzspannung, als Reaktion auf eine Änderung einer auf das Netz wirkenden Größe, insbesondere einer in das Netz eingespeisten Wirkleistung oder Blindleistung, in Bezug auf die Änderung der auf das Netz wirkenden Größe.

Die Netzsensitivität gibt also an, wie empfindlich das Netz reagiert. Auch hierzu wurde erkannt, dass der Vorhaltewinkel umso größer gewählt werden kann, je empfindlicher das Netz ist, um dadurch umso mehr instantane Stützleistung vorzuhalten. Eine hohe Netzsensitivität ist kein Hinweis auf eine Störung, aber es kann leichter zu einer Störung kommen, je größer die Netzsensitivität ist.

Insbesondere kann die Netzsensitivität NS über die folgende Formel definiert werden:

$$NS = \Delta P / \Delta U$$

Hierbei bezeichnet $\Delta P$ die Änderung der eingespeisten Wirkleistung, nämlich der eingespeisten Parkleistung und $\Delta U$ die resultierende Änderung der Netzspannung U.

Alternativ kann die Netzsensitivität NS über die folgende Formel definiert werden:

$$NS = \Delta Q / \Delta f$$

Hierbei bezeichnet $\Delta Q$ die Änderung der eingespeisten Blindleistung, nämlich der eingespeisten Parkleistung und $\Delta f$ die resultierende Änderung der Netzfrequenz f.

Diese Differenzen werden bei beiden Definitionen über einen sehr kurzen Zeitraum gebildet, insbesondere im Bereich von einer Sekunde oder darunter. Vorteilhafterweise kann in den Formeln statt dem Quotienten der Differenzen auch eine entsprechende Ableitung verwendet werden, um die jeweilige Formel umzusetzen.

Als eine Einstellvorschrift wird vorgeschlagen, dass der Vorhaltewinkel in seiner Größe, insbesondere dem Betrage nach im Bereich von 1° bis 30°, in Abhängigkeit von einem Kurzschlussstromverhältnis ausgewählt wird, insbesondere umso größer gewählt wird, je kleiner das Kurzschlussstromverhältnis ist. Abhängig von der Größe des Kurzschlussstromverhältnisses, das auch als SCR abgekürzt wird, kann die Größe des Winkels eingestellt werden. Durch die Größe des Winkels kann die absolute Reaktion festgelegt werden, mit der der Einspeiser auf Netzveränderungen reagiert. Je kleiner das SCR ist, umso mehr Leistung muss bei einer Winkeländerung eingespeist werden und daher wird vorgeschlagen, dass der Vorhaltewinkel dem Betrage nach umso größer gewählt wird, je kleiner das SCR ist.

Ein wichtiges Kriterium beim Anschließen von Großkraftwerken an ein elektrisches Versorgungsnetz ist das Kurzschlussstromverhältnis, das auch im deutschen Sprachgebrauch in Fachkreisen als "Short circuit ratio" bezeichnet und mit "Scr" oder "SCR" abgekürzt wird. Dieses Kurzschlussstromverhältnis ist das Verhältnis der Kurzschlussleistung zur Anschlussleistung. Hierbei wird unter Kurzschlussleistung diejenige Leistung verstanden, die das betreffende Versorgungsnetz an dem betrachteten Netzanschlusspunkt, an dem das Kraftwerk angeschlossen werden soll, bereitstellen kann, wenn dort ein Kurzschluss auftritt. Die Anschlussleistung ist die Anschlussleistung des anzuschließenden Kraftwerks, insbesondere also die Nennleistung des anzuschließenden Generators.

Als eine Einstellvorschrift wird vorgeschlagen, dass der Vorhaltewinkel in seiner Größe, insbesondere dem Betrage nach im Bereich von 1° bis 30°, in Abhängigkeit von wenigstens einer weiteren im elektrischen Versorgungsnetz implementierten Systemdienstleistung anderer Einspeiser oder anderer Steuersysteme gewählt wird, insbesondere in Abhängigkeit wenigstens einer Systemdienstleistung, die als frequenzabhängige Leistungssteuerung ausgebildet ist. Hier liegt besonders der Gedanke zu Grunde, dass dadurch der vorliegende Einspeiser, durch diese abhängige Wahl des Vorhaltewinkels auf das Systemverhalten angepasst wird. Durch diese Systemdienstleistungen, die auch als Stützfunktionen bezeichnet werden können, verhält sich das elektrische Versorgungsnetz anders und das kann damit berücksichtigt werden.

Gemäß einer Ausgestaltung wird vorgeschlagen, dass der Führungswinkel am Umrichterausgang vorgegeben wird und der Einspeisestrom am Umrichterausgang den Einspeisephasenwinkel aufweist. Außerdem ist hierzu vorgesehen, dass am Netzanschlusspunkt ein Blindleistungsphasenwinkel vorliegt, der einen Phasenwinkel zwischen dem am Netzanschlusspunkt eingespeisten Strom und der Netzspannung am Netzanschlusspunkt bildet. Zu diesen beiden Voraussetzungen wird vorgeschlagen, dass der Vorhaltewinkel zu dem Blindleistungsphasenwinkel mit einem abweichenden Wert vorgegeben wird.

Der Einspeisestrom erfährt also zwischen dem Umrichterausgang und dem Netzanschlusspunkt, bezogen auf die zugehörige Spannung, eine Phasenverschiebung, bzw. die Spannung erfährt dort eine Phasenverschiebung, die sich als Phasenverschiebung zwischen eingespeistem Strom und Spannung auswirkt. Dadurch verändert sich der Blindleistungsanteil. Besonders ist es daher so, dass sich der Blindleistungsanteil am Umrichterausgang von dem Blindleistungsanteil am Netzanschlusspunkt unterscheidet. Besonders kann ein Blindleistungsphasenwinkel am Netzanschlusspunkt vorgesehen sein, um dort eine gewünschte Blindleistung einzuspeisen. Am Umrichterausgang wird aber ein anderer Winkel, nämlich besonders ein anderer Vorhaltewinkel, gewählt. Der Vorhaltewinkel wird somit nicht zum Einspeisen einer am Netzanschlusspunkt geforderten Blindleistung gewählt, sondern zum Zwecke der vorstehend erläuterten Stützeffekte.

Besonders wird vorgeschlagen, dass der Vorhaltewinkel am Umrichterausgang und der Blindleistungsphasenwinkel am Netzanschlusspunkt mit unterschiedlichen Werten vorgegeben werden, sodass sich ein Differenzwinkel zwischen dem Vorhaltewinkel und dem Blindleistungsphasenwinkel ergibt. Dazu wird weiter vorgeschlagen, dass wenigstens ein Spannungssteuerungsmittel zwischen dem Umrichterausgang und dem Netzanschlusspunkt so eingestellt und/oder zugeschaltet wird, dass sich der Differenzwinkel zwischen dem Umrichterausgang und dem Netzanschlusspunkt ergibt.

Besonders kommt als Spannungssteuerungsmittel ein Phasenschieber, besonders durch eine Kondensatorbank, in Betracht. Aber auch ein Stufentransformator kann vorgesehen sein. Eine solche Kondensatorbank kann in ihrer Kapazität steuerbar sein. Eine Möglichkeit besteht darin, dies durch entsprechende Verschaltungsänderung innerhalb der Kondensatorbank zu realisieren, oder einfach durch Zu- oder Abschalten von Teilen der Kondensatoren der Kondensatorbank. Es können natürlich auch mehrere eigenständige Kondensatoren oder Kondensatorbänke vorgesehen sein, die dann aber sinngemäß wie eine veränderbare Kondensatorbank wirken.

Gemäß einer Ausführungsform wird vorgeschlagen, dass wenigstens ein Spannungssteuerungsmittel vorgesehen ist, um die Netzspannung am Netzanschlusspunkt zu verändern. Dazu ist vorgesehen, dass das wenigstens eine Spannungssteuerungsmittel die Netzspannung so steuert, dass Spannungsabweichungen der Netzspannung am Netzanschlusspunkt von einer vorgebbaren Sollspannung, bedingt durch Abweichungen zwischen dem Vorhaltewinkel und dem Blindleistungsphasenwinkel, zumindest teilweise ausgesteuert oder ausgeregelt werden.

Durch das Vorgeben des Vorhaltewinkels ergibt sich eine Phasendifferenz zwischen dem Einspeisestrom und der Netzspannung. Das kann zu dem Einspeisen einer Blindleistung führen, was wiederum zu einer Veränderung der Netzspannung am Netzanschlusspunkt führen kann. Der Vorhaltewinkel wird aber nicht so vorgegeben, dass eine am Netzanschlusspunkt vorgebbare Sollspannung eingehalten wird, sondern der Vorhaltewinkel wird so vorgegeben, dass die oben beschriebenen Effekte als Reaktion auf eine Spannungsänderung, insbesondere einen Spannungssprung entstehen. Die Vorgabe des Vorhaltewinkels führt somit zu einer Netzspannung am Netzanschlusspunkt, die nicht der vorgebbaren Sollspannung entspricht. Es ergeben sich also entsprechende Spannungsabweichungen zwischen der Netzspannung am Netzanschlusspunkt und der vorgebbaren Sollspannung.

Diese Abweichungen könnten durch Veränderung des Vorhaltewinkels ausgeregelt oder ausgesteuert werden. Der Vorhaltewinkel soll aber nicht verändert werden. Daher wird stattdessen vorgeschlagen, die Netzspannung durch das Spannungssteuerungsmittel so zu steuern, dass die genannten Spannungsabweichungen zumindest teilweise ausgesteuert oder ausgeregelt werden. Dazu können beispielsweise Kondensatorbänke zwischen dem umrichtergeführten Einspeiser und dem Netzanschlusspunkt vorgesehen sein. Dadurch kann der genannten Steuerungsabweichung entgegengewirkt werden.

Ein solches Spannungssteuerungsmittel muss aber nicht zwischen dem umrichtergeführten Einspeiser und dem Netzanschlusspunkt angeordnet sein. Es kommt beispielsweise auch in Betracht, eine Steuerung der Netzspannung am Netzanschlusspunkt durch einen Stufentransformator durchzuführen, der in dem betreffenden Netzanschnitt angeordnet ist, also aus Sicht des umrichtergeführten Einspeisers hinter dem Netzanschlusspunkt.

Dadurch kann erreicht werden, dass der Vorhaltewinkel gezielt zum Erreichen der vorstehend beschriebenen Effekte eingestellt werden kann, resultierende Spannungsabweichungen aber anderweitig ausgesteuert oder ausgeregelt werden können.

Gemäß einer Ausführungsform wird vorgeschlagen, dass das Spannungssteuerungsmittel in Abhängigkeit von dem Vorhaltewinkel eingestellt wird. Dadurch kann auch eine Spannungsabweichung bedingt durch den Vorhaltewinkel unmittelbar adressiert werden. Die Werte, wie das Spannungsmittel einzustellen ist, können vorbestimmt sein und beispielsweise fest vorgebbar in Abhängigkeit von dem aktuellen Vorhaltewinkel eingestellt werden. In diesem Fall läge eine Steuerung vor, die auch Spannungsabweichungen der Netzspannung aussteuern können.

Alternativ kann aber auch eine Regelung mit einer entsprechenden Rückführung eingesetzt werden, bei der beispielsweise ein Soll-Ist-Wert-Vergleich zwischen der Netzspannung am Netzanschlusspunkt und der vorgebbaren Sollspannung durchgeführt wird und abhängig davon das Spannungssteuerungsmittel gesteuert wird.

Natürlich können auch mehrere Spannungssteuerungsmittel vorgesehen sein, die hier aufgrund ihrer funktionalen Aufgabe selbst bei baulicher Trennung zu einem Spannungssteuerungsmittel zusammengefasst werden können.

Die Spannungsabweichungen müssen nicht vollständig ausgeregelt werden. Dadurch können beispielsweise Situationen vermieden werden, in denen bei nur geringer Spannungsabweichung an zwei Netzanschlusspunkten zweier umrichtergeführter Einspeiser jeweils die Spannungsregelung dieser beiden exemplarisch genannten Einspeiser gegeneinander arbeiten, um eine Spannung präzise auszuregeln.

Gemäß einer Ausführungsform wird vorgeschlagen, dass das wenigstens eine Spannungssteuerungsmittel wenigstens ein Mittel ist ausgewählt aus der Liste, die eine Kondensatorbank mit einstellbaren Kapazitätswerten, einen Stufentransformator und eine Drossel aufweist. Das Spannungssteuerungsmittel kann also insbesondere eine Kondensatorbank mit einstellbaren Kapazitätswerten sein. Zusätzlich oder alternativ kann ein Spannungssteuerungsmittel ein Stufentransformator sein und außerdem oder alternativ kann ein Spannungssteuerungsmittel eine Drossel sein.

Durch eine Kondensatorbank können Phasenverschiebungen des Wechselspannungssignals erreicht werden. Durch die Einstellbarkeit der Kapazitätswerte kann somit auch die Phasenverschiebung einstellbar gemacht werden. Durch die Phasenverschiebung, die am Netzanschlusspunkt zu einem Winkel zwischen eingespeistem Strom und Netzspannung führt, kann somit Blindstrom eingestellt werden und dadurch eine Spannungsbeeinflussung durchgeführt werden.

Ein Stufentransformator kann zwischen dem umrichtergeführten Einspeiser und dem Netzanschlusspunkt oder zwischen dem Netzanschlusspunkt und einem weiteren Abschnitt im elektrischen Versorgungsnetz angeordnet sein. Besonders im zweiten Fall kann der Stufentransformator unmittelbar eine Spannung in dem Netzabschnitt verändern, in dem er angeschlossen ist.

Durch eine Drossel kann ebenfalls eine Phasenverschiebung vorgenommen und bei einer einstellbaren Drossel auch eingestellt werden. Eine solche Drossel wird insbesondere zwischen dem umrichtergeführten Einspeiser und dem Netzanschlusspunkt angeordnet, um dort zu der Phasenverschiebung zu führen, die wiederum Auswirkungen am Netzanschlusspunkt hat.

Gemäß einer Ausführungsform wird vorgeschlagen, dass die Verzögerungsdynamik eine Hauptzeitkonstante aufweist, und die Hauptzeitkonstante im Bereich von 10 ms bis 100 ms gewählt wird. Eine solche Hauptzeitkonstante, die bei einer Verzögerungsfunktion erster Ordnung somit die einzige Zeitkonstante wäre, bestimmt im Wesentlichen die Dynamik bzw. Geschwindigkeit, mit der der Einspeisephasenwinkel dem Führungswinkel nachgeführt wird. Die Hauptzeitkonstante kann auch als die größte Zeitkonstante bezeichnet werden. Im transienten Betrieb kann beispielsweise ein einziger Phasensprung des Netzphasenwinkels auftreten, sodass sich entsprechend auch ein Phasensprung des Führungswinkels ergibt. Danach kann der Betrieb wieder normal fortgesetzt werden, indem sowohl der Phasenwinkel als auch der Führungswinkel wieder synchron mit der Netzfrequenz umläuft. Dann liegt somit wieder ein stationärer Betrieb vor.

Da im stationären Betrieb ein Differenzwinkel zwischen dem Einspeisephasenwinkel und dem Führungswinkel auf null ausgeregelt wird, beschreibt somit die Führungsdynamik, und damit auch die Hauptzeitkonstante, wie bzw. wie schnell in dem genannten Fall des Phasensprungs der Einspeisephasenwinkel dem entsprechend gesprungenen Führungswinkel nachgeführt wird. Bei dem genannten Sprung des Phasenwinkels ergibt sich somit ein Sprung des Differenzwinkels zwischen dem Einspeisephasenwinkel und dem Führungswinkel. Die Führungsdynamik kann somit gekennzeichnet oder beschrieben werden durch das Verhalten dieses Differenzwinkels auf den genannten Phasensprung. Der Verlauf des Differenzwinkels bildet somit eine Sprungantwort im regelungstechnischen Sinne. Die Zeitkonstante, besonders die Hauptzeitkonstante, beschreibt die Dynamik dieser Sprungantwort.

Insbesondere wird vorgeschlagen, dass die Verzögerungsdynamik als Verzögerungsfunktion erster Ordnung oder zweiter Ordnung ausgebildet ist. Im Falle einer Verzögerungsfunktion erster Ordnung kennzeichnet die Hauptzeitkonstante somit die Zeit, in der der Differenzwinkel nach dem Sprung wieder um 63 % abgenommen hat. Auf gleiche oder ähnliche Weise kann auch die Hauptzeitkonstante für die Verzögerungsfunktion zweiter Ordnung definiert werden. Insbesondere wird vorgeschlagen, dass die Verzögerungsfunktion zweiter Ordnung so ausgewählt wird, dass sie keinen Überschwinger aufweist. Eine Sprungantwort nähert sich dann also asymptotisch dem Endwert.

Mit einer solchen Verzögerungsdynamik kann somit erreicht werden, dass der Einspeisephasenwinkel im stationären Betrieb, nach einer kurzen Ausregelungszeit, dem Führungswinkel entspricht. Der Vorhaltewinkel beschreibt dann den Differenzwinkel zwischen Einspeisephasenwinkel und Netzphasenwinkel. Tritt ein Phasensprung im Netz auf, springt somit sofort auch der Führungswinkel, nicht aber der Einspeisephasenwinkel. Es ergibt sich also für einen Moment, der durch die Hauptzeitkonstante vorgegeben ist, ein gänzlich anderer Winkel zwischen Einspeisephasenwinkel und Netzphasenwinkel. Das führt zu den bereits beschriebenen Effekten.

Eine Verzögerungsfunktion erster Ordnung zeichnet sich besonders dadurch aus, dass sie selbst schwingungsfrei ist und sich daher als Dynamik zum Nachführen gut eignet. Ihre Sprungantwort nähert sich asymptotisch dem Endwert.

Die Verzögerungsfunktion zweiter Ordnung kann schwingungsfrei oder zumindest schwingungsarm eingestellt werden. Sie hat zudem den Vorteil, dass sie anfangs nicht sofort ansteigt bzw. abfällt und dadurch der Differenzwinkel zunächst im Wesentlichen auf dem Wert gehalten wird, der sich nach dem Phasensprung einstellt. Dann kann der Differenzwinkel aber mit der Verzögerungsfunktion zweiter Ordnung asymptotisch an den Wert null herangeführt werden. Auch bei der Verzögerungsfunktion erster Ordnung kann der Differenzwinkel asymptotisch an seinen neuen Wert, nämlich den Wert null, herangeführt werden.

Gemäß einer Ausgestaltung wird vorgeschlagen, dass ein Betrieb, in dem der Einspeisephasenwinkel dem Führungswinkel mit der Verzögerungsdynamik nachgeführt wird, als Stützbetrieb vorgesehen ist und der Stützbetrieb in Abhängigkeit von der Netzfrequenz und/oder dem Netzphasenwinkel aktiviert wird. Hier wurde besonders erkannt, dass in Abhängigkeit von der Frequenz ein stabiler oder weniger stabiler Zustand des elektrischen Versorgungsnetzes vorliegen kann. Auch wurde erkannt, dass die Art der vorgeschlagenen Netzstützung durch das verzögerte Nachführen des Einspeisephasenwinkels in Abhängigkeit von der Netzfrequenz unterschiedliche Wirkung entfalten kann bzw. in Abhängigkeit von der Netzfrequenz unterschiedlich kritische Situationen auftreten können, für die der vorgeschlagene Stützbetrieb sinnvoll wäre.

Insbesondere wird der Stützbetrieb aktiviert, wenn die Netzfrequenz oberhalb einer vorgebbaren Auslösefrequenz liegt, die Netzfrequenz mit einem Frequenzgradienten steigt, der oberhalb eines vorgebbaren Auslösegradienten liegt und/oder die Netzfrequenz um einen Wert springt, der oberhalb einer vorgebbaren Frequenzsprunggrenze liegt.

Bei einer hohen Netzfrequenz kann diese durch plötzlichen Wegfall einer Last noch höher werden. Somit kann daher vorsorglich der Stützbetrieb aktiviert werden.

Wenn die Netzfrequenz mit einem hohen Frequenzgradienten steigt, besteht ebenfalls die Gefahr, dass durch Wegfall einer Last eine noch höhere Frequenz erreicht wird. Auch dafür kann vorsichtshalber ein Stützbetrieb aktiviert werden, da es regelungstechnisch möglich ist, den Führungswinkel und Einspeisephasenwinkel schneller einzustellen, als sich die Netzfrequenz ändert. Die Kriterien, ob die Netzfrequenz oberhalb einer vorgebbaren Auslösefrequenz liegt oder die Netzfrequenz mit einem Frequenzgradienten steigt, der oberhalb des vorgebbaren Auslösegradienten liegt, kann auch kombiniert werden, nämlich indem der Stützbetrieb dann aktiviert wird, wenn wenigstens eines der beiden Kriterien erfüllt ist. Sind beide Kriterien erfüllt, wird bzw. bleibt der Stützbetrieb ebenfalls aktiviert.

Vorzugsweise wird der Stützbetrieb aktiviert, wenn die Netzphase springt, dann kann ebenfalls ein kritischer Fall vorliegen, bei dem die Netzphase beispielsweise durch einen Lastwegfall nochmals weiter springt. Um dem vorzubeugen, kann ein Stützbetrieb aktiviert werden. Es kommt hier eine zusätzliche oder alternative Aktivierung des Stützbetriebs abhängig von dem Kriterium in Betracht, ob die Netzphase um einen Wert springt, der oberhalb einer vorgebbaren Phasensprunghöhe liegt. Die Aktivierung kann dann vorgenommen werden, wenn wenigstens eines der Kriterien erfüllt ist.

Erfindungsgemäß wird auch ein Einspeiser vorgeschlagen, insbesondere ein Windenergiesystem, zum Einspeisen elektrischer Leistung in ein elektrisches Versorgungsnetz an einem Netzanschlusspunkt, wobei

- der Netzanschlusspunkt an einem Netzabschnitt des elektrischen Versorgungsnetzes angeordnet ist und die elektrische Leistung über den Netzanschlusspunkt in den Netzabschnitt eingespeist wird,

- das elektrische Versorgungsnetz eine Netzspannung mit einer Netzfrequenz und einem mit der Netzfrequenz umlaufenden Netzphasenwinkel aufweist und durch eine Netznennfrequenz gekennzeichnet ist,

- der Einspeiser wenigstens einen Umrichter aufweist,

  - der Umrichter einen Umrichterausgang zum Abgeben eines Ausgangsstromes aufweist, und

  - der Umrichter stromprägend arbeitet, wobei

- eine Steuereinrichtung vorgesehen ist, die dazu vorbereitet ist, das Einspeisen so zu steuern, dass

- ein Einspeisestrom von dem Umrichter erzeugt wird mit einem mit der Netzfrequenz umlaufenden Einspeisephasenwinkel,

- zum Steuern des Einspeisephasenwinkels ein mit der Netzfrequenz umlaufender Führungswinkel vorgegeben wird, wobei der Führungswinkel einen vorgebbaren Vorhaltewinkel in Bezug auf den Netzphasenwinkel aufweist, so dass der Führungswinkel dem Netzphasenwinkel um den Vorhaltewinkel nacheilt, und

- der Einspeisephasenwinkel dem Führungswinkel mit einer Verzögerungsdynamik nachgeführt wird, wobei

- die Verzögerungsdynamik so ausgebildet ist, dass

  - im stationären Betrieb, wenn der Führungswinkel und der Netzphasenwinkel gleichförmig mit der Netzfrequenz umlaufen, ein Differenzwinkel zwischen dem Einspeisephasenwinkel und dem Führungswinkel auf null ausgeregelt wird, und

  - der Einspeisephasenwinkel in einem transienten Betrieb, wenn sich eine zeitliche Ableitung des Führungswinkels ändert, dem Führungswinkel mit einer veränderlichen Abweichung nachgeführt wird.

Besonders ist ein solcher Einspeiser, insbesondere nämlich ein Windenergiesystem, also eine Windenergieanlage oder ein Windpark, dazu vorbereitet, so zu arbeiten wie dies vorstehend anhand der Ausführungsformen des Verfahrens zum Einspeisen erläutert wurde. Insbesondere ist die Steuereinrichtung dazu vorgesehen, den Einspeiser entsprechend zu steuern. Insbesondere der Umrichter wird entsprechend gesteuert. Der Umrichter kann als Frequenzumrichter oder Frequenzwechselrichter ausgebildet sein.

Damit können die Vorteile erreicht werden, die vorstehend im Zusammenhang mit den Verfahren gemäß wenigstens einer Ausführungsform erläutert wurden. Besonders kann erreicht werden, dass Windenergiesysteme, also Windenergieanlagen oder Windparks, in vorteilhafter Weise das elektrische Versorgungsnetz noch weiter stützen, nämlich insbesondere auch im Falle von Phasensprüngen eine quasi instantane Reaktion bereitstellen können, die sich netzstützend und/oder netzberuhigend auswirkt.

Die Erfindung wird nun nachfolgend beispielhaft unter Bezugnahme auf die begleitenden Figuren näher erläutert.

Figur 1     zeigt eine Windenergieanlage in einer perspektivischen Darstellung.

Figur 2     zeigt einen Windpark in einer schematischen Darstellung.

Figur 3     illustriert relevante Winkel in einer komplexen Zeigerdarstellung.

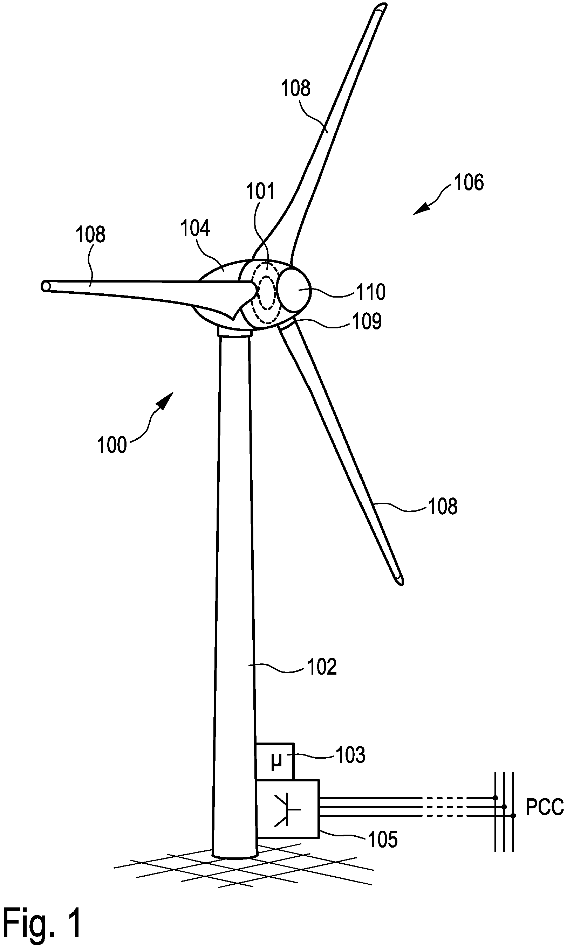

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

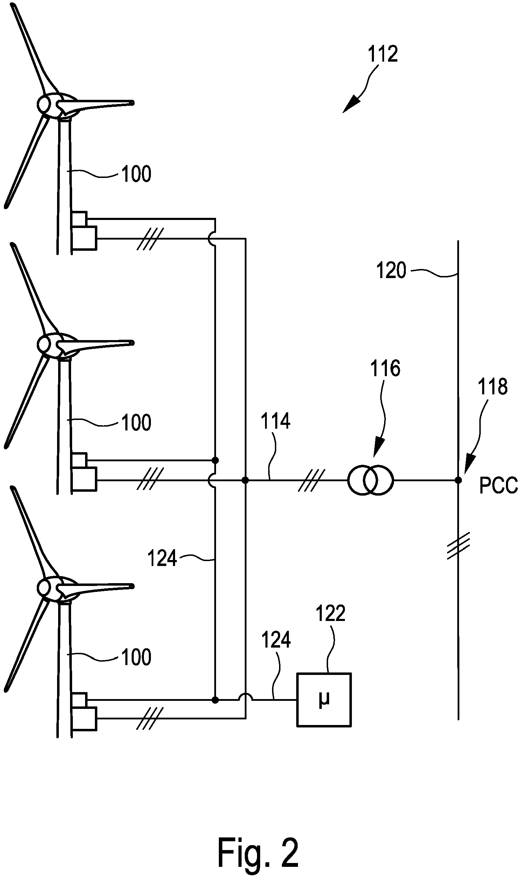

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Figur 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

Figur 3 zeigt in einer komplexen Zeigerdarstellung einen Spannungszeiger U, einen Stromzeiger I und einen Hilfszeiger $I_F$. Diese drei Zeiger repräsentieren jeweils einen Augenblickswert einer Wechselspannung bzw. eines Wechselstroms. Die drei Zeiger laufen im Wesentlichen mit Netzfrequenz um. Dabei wird die momentane Winkelposition des Spannungszeigers durch den Netzphasenwinkel $\varphi_U$ gekennzeichnet. Die Spannung, insbesondere die Netzspannung, läuft somit mit diesem Zeiger und damit mit dem Netzphasenwinkel $\varphi_U$ um. Der Umlauf rechts herum wird symbolisch durch den Umlaufpfeil 302 angedeutet.

Der Hilfszeiger $I_F$ wird hinsichtlich seiner Winkellage in Bezug auf den Spannungszeiger U festgelegt. Er eilt hier nämlich um den Vorhaltewinkel $\varphi_V$ dem Spannungszeiger U nach.

Jedenfalls läuft der Hilfszeiger $I_F$ mit einem Führungswinkel $\varphi_L$ um. Der jeweils aktuelle Führungswinkel $\varphi_L$ kann somit aus dem aktuellen Netzphasenwinkel $\varphi_U$ abzüglich des Vorhaltewinkels $\varphi_V$ berechnet werden.

Der einzuspeisende Strom, also der Einspeisestrom, kann durch den Stromzeiger I vorgegeben bzw. bezeichnet werden. Der Stromzeiger I wird durch den Einspeisephasenwinkel $\varphi_I$ gekennzeichnet. Der Stromzeiger I läuft ebenfalls mit Netzfrequenz um, sodass auch sein Einspeisephasenwinkel $\varphi_I$ entsprechend umläuft. Im idealen stationären Fall liegen der Stromzeiger I und der Hilfszeiger $I_F$ übereinander, sind also identisch. In einem transienten Fall, wenn also der ideal stationäre Fall noch nicht erreicht ist, wird der Stromzeiger I dem Hilfszeiger $I_F$ nachgeführt. Das kann auch synonym als angeglichen bezeichnet werden, denn das Nachlaufen muss sich nicht auf die Umlaufrichtung gemäß dem Umlaufpfeil 302 beziehen.

In der gezeigten Variante der Figur 3 ist das aber der Fall, da wird der Stromzeiger auch in Richtung des Umlaufpfeils 302 dem Hilfszeiger $I_F$ nachgeführt. Es ergibt sich ein Differenzwinkel $\varphi_\Delta$, der zum Erreichen des stationären Zustandes hin auf null ausgeregelt werden soll.

Es ergibt sich somit ein Reaktionswinkel als Summe des Differenzwinkels $\varphi_\Delta$ und des Vorhaltewinkels $\varphi_V$. Dieser Reaktionswinkel entspricht im stationären Zustand dem Vorhaltewinkel $\varphi_V$, aber im Fall einer Reaktion auf einen Phasensprung weicht dieser Reaktionswinkel $\varphi_R$ von dem Vorhaltewinkel $\varphi_V$ ab, nämlich um den Differenzwinkel $\varphi_\Delta$. Insoweit stellt der Reaktionswinkel $\varphi_R$ eine Reaktion auf einen Phasensprung dar, solange der Differenzwinkel noch nicht vollständig ausgeregelt ist.

Figur 3 zeigt somit veranschaulichend eine Augenblickssituation, in der der Differenzwinkel noch nicht ganz auf null ausgeregelt ist, der Stromzeiger I dem Hilfszeiger $I_F$ also noch nicht vollständig entspricht. Die Situation in der Figur 3 ist zwar in dem einen Quadranten nur gezeigt, diese Stromzeiger laufen aber kontinuierlich weiter um. Einzig der Vorhaltewinkel $\varphi_V$ ist konstant und der Differenzwinkel $\varphi_\Delta$ ändert sich nur wenig, nämlich mit einer Verzögerungsdynamik, mit der er gegen null geregelt wird bzw. mit der der Stromzeiger I dem Hilfszeiger $I_F$ nachgeführt wird. Entsprechend wird auch der Einspeisephasenwinkel $\varphi_I$ dem Führungswinkel $\varphi_L$ ständig nachgeführt, weil beide Stromzeiger und damit beide Winkel ständig umlaufen. Die Nachführung erfolgt aber so, dass der Differenzwinkel $\varphi_\Delta$ auf null geregelt wird. Dieser ideal stationäre Zustand ist in dem in der der Figur 3 abgebildeten Zeitpunkt aber noch nicht erreicht.

Mit gestrichelten Linien ist in der Figur 3 ein Phasensprung und seine Auswirkungen illustriert. Dabei wird zunächst davon ausgegangen, dass die Phase der Netzspannung springt, sodass also der Netzphasenwinkel $\varphi_U$ springt. Das Ergebnis ist dann der veränderte, also gesprungene Spannungszeiger U', zu dem sich somit ein gesprungener Netzphasenwinkel $\varphi_U$' ergibt.

Der Vorhaltewinkel $\varphi_V$ verändert sich nicht, wird nun aber auf den neuen Spannungszeiger, also den veränderten Spannungszeiger U', angewendet und damit auf den veränderten Netzphasenwinkel $\varphi_U$' angewendet. Entsprechend ergibt sich ein gesprungener bzw. veränderter Führungswinkel $\varphi_L$' und damit ein entsprechender gesprungener bzw. veränderter Hilfszeiger $I_F$'. Der Hilfszeiger und damit auch der Führungswinkel kann dieser veränderten Situation im Wesentlichen sofort und damit verzögerungsfrei folgen, weil er dem Grunde nach nur eine Rechengröße ist. Etwaige Dynamiken, die auftreten könnten und oben erläutert wurden, können wenigstens zum Zwecke der Veranschaulichung vernachlässigt werden.

Der Stromzeiger I steht allerdings für den tatsächlich eingespeisten Strom. Er könnte zwar auch ohne nennenswerte Verzögerung in der neuen Situation nach dem Phasensprung nachgeführt werden, da er durch einen Umrichter, also einen Frequenzumrichter oder einen Frequenzwechselrichter, erzeugt wird, er wird hier aber bewusst nicht sofort nachgeführt. Stattdessen wird der Stromzeiger I und damit der Einspeisephasenwinkel $\varphi_I$ dem veränderten Hilfszeiger $I_F$' bzw. dem veränderten Führungswinkel $\varphi_L$' mit einer Verzögerungsdynamik nachgeführt. Unmittelbar nach dem Sprung bleibt die Einspeisesituation des Einspeisestroms somit im Wesentlichen unverändert. Der Einspeisestrom, der hier durch den Stromzeiger I gekennzeichnet ist, wird also mit derselben Sinusfunktion wie vorher, ohne Phasensprung, weiter eingespeist. Der Stromzeiger I läuft also weiter mit der Netzfrequenz um. Erst nach und nach gleicht sich der Stromzeiger I dem veränderten Hilfszeiger $I_F$' an.

Es stellt sich nun folgender Effekt ein. Dadurch, dass der Einspeisestrom und damit repräsentativ der Stromzeiger I dem Phasensprung der Netzspannung nicht sofort angeglichen wird, stellt sich ein vergleichsweise großer Reaktionswinkel $\varphi_R$' ein. Jedenfalls in dem gezeigten Beispiel vergrößert er sich. Bei einer entgegengesetzten Sprungrichtung würde er sich verkleinern.

Ausgehend von der dargestellten Situation in Figur 3 vergrößert sich also der Reaktionswinkel $\varphi_R$' auf den veränderten Reaktionswinkel $\varphi_R$'. Der eingespeiste Strom hat also eine stärkere Phasenverschiebung zur Netzspannung als vorher. Das führt dazu, dass sich die eingespeiste Wirkleistung verringert und die eingespeiste Blindleistung erhöht. Der Phasensprung führt also zu einer instantanen Erhöhung der Blindleistung, was zu einer erhöhten Spannungsstützung führt. Außerdem führt er zu einer Verringerung der Wirkleistung, was ebenfalls eine Stützwirkung hat, da sich der illustrierte Phasensprung aufgrund des Wegfalls einer Last ergeben kann. Wenn eine Last wegfällt, verringert sich also die abgenommene Wirkleistung und darauf reagiert der umrichtergeführte Einspeiser gemäß der in Figur 3 gezeigten Situation somit instantan mit einer Verringerung der eingespeisten Wirkleistung.

Die Erfindung betrifft somit Steuerungs- und Regelungsstrategien für Windenergieanlagen und anderer leistungselektronisch gekoppelter Einspeiser, um im Netzparallelbetrieb spannungsprägende Eigenschaften bereitzustellen.

Besonders kann eine Erhöhung des umrichterbasierten Erzeugungsanteils in Verbundnetzen erreicht werden. Möglichst soll eine Entwicklung eines Regelungskonzeptes für Netze vorgeschlagen werden, welche zeitweise fast vollständig durch umrichtergeführte Einspeisung gefahren werden, möglichst ohne Abstriche in der Systemsicherheit.

Es wurde erkannt, dass konventionelle Kraftwerke, also Kraftwerke mit direkt gekoppelten Synchronmaschinen, spannungsprägende Eigenschaften physikalisch aufweisen. Da die meisten regenerativen Einspeiser nicht über direkt gekoppelte Synchronmaschinen verfügen, bzw. der Einsatz aus anderen Gesichtspunkten nicht sinnvoll ist, stehen diese physikalischen Eigenschaften zukünftig nicht zur Verfügung.

Mit der vorgeschlagenen Idee lässt sich der notwendige Anteil spannungsprägender Systeme beim Betrieb in Verbundnetzen weiter reduzieren, bzw. im Idealfall vielleicht sogar auf null bringen.

Es wurde erkannt, dass rein spannungsprägende Einspeiser von der Leistungsfähigkeit gegenüber stromprägenden Systemen überdimensioniert werden müssen. Es wurde erkannt, dass eine Überdimensionierung um ca. 50 % nötig ist, um Phasensprünge von 30° zuzulassen.

Dies lässt sich mit der hier gezeigten Idee umgehen, zumindest teilweise.

Es wurde auch erkannt, dass die Entwicklung einer Regelung für rein spannungseinprägende Einspeiser Ressourcen benötigt. Das Regelungskonzept ist sehr unterschiedlich zu heutigen typischen umrichtergeführten Einspeisern. Das lässt sich mit der Idee ebenfalls vermeiden.

Jedenfalls erreicht die vorgeschlagene Lösung in bestimmten Situationen einen spannungsprägenden Effekt, ohne aber ansonsten spannungsprägend ausgelegt zu sein. Damit kann also ansonsten ein übliches Regelungskonzept weiter eingesetzt werden.

Es wurden auch die folgenden Aspekte erkannt und ausgenutzt:

Da Umrichter sehr schnell im Arbeitspunkt verändert werden können, auch innerhalb der Zeitkonstanten einer Frequenzveränderung im Netz, kann z.B. ab einer bestimmten Unterfrequenz der forciert übererregte Betriebsmodus aktiviert werden, und bei einer Überfrequenz ebenfalls der forciert übererregte Betriebsmodi aktiviert werden.

Ein übererregter Betriebsmodus, der auch als übererregte Fahrweise bezeichnet werden kann, beschreibt einen Betriebsmodus, bei dem der Führungswinkel dem Netzphasenwinkel nacheilt. Damit wird bei Lastzuschaltungen, Frequenzeinbrüchen oder Phasensprüngen eine positive Stützleistung ins Netz eingespeist.

Ist ein solcher Betrieb aufgrund von Spannungs- und Blindleistungsbeschränkungen nicht möglich, kann ein Umrichtersystem auch kombiniert mit passiven Bauelementen arbeiten, wie bspw. Drosseln und/oder Stufentransformatoren in Kombination mit einer übererregten Fahrweise. Dadurch kann beispielsweise das Umrichtersystem in einem übererregten Betrieb betrieben werden, ohne dass es zu unerlaubten Spannungsbandverletzungen kommt. Es wurde erkannt, dass durch den übererregten Betrieb, wenn also übererregt gefahren wird, ergänzende Hilfsmittel verwendet werden können, um eine Spannungsregelung durchzuführen, insbesondere, um die Spannung in einem vorgegebenen Band zu halten.

Das kann durch einen Stufentransformatorerreicht werden, der dann ein solches Hilfsmittel bildet.

Auch bei einem Wegdriften, insbesondere schnellen Wegdriften der Frequenz, kann durch die schnelle Erfassung ab einer bestimmten Frequenzabweichung der Phasenwinkel des Stroms der Windenergieanlage den Spannungswinkel "überholen", um die Eigenschaften bereitzustellen. Ein Wegdriften, insbesondere schnelles Wegdriften der Frequenz in Richtung kleinerer Frequenzen kann als ein Zustand bezeichnet werden, bei dem die Einspeiseleistung übererregt eingespeist wird.

Diese Funktionalität wird hier ausgenutzt und kann als eine $\varphi(f)$-Regelung bezeichnet werden.

**Patentansprüche**

1. Verfahren zum Einspeisen elektrischer Leistung in ein elektrisches Versorgungsnetz (120) an einem Netzanschlusspunkt (118) mittels eines umrichtergeführten Einspeisers, insbesondere mittels eines Windenergiesystems (100, 112), wobei

    - der Netzanschlusspunkt (118) an einem Netzabschnitt des elektrischen Versorgungsnetzes (120) angeordnet ist und die elektrische Leistung über den Netzanschlusspunkt (118) in den Netzabschnitt eingespeist wird,
    - das elektrische Versorgungsnetz (120) eine Netzspannung mit einer Netzfrequenz und einem mit der Netzfrequenz umlaufendem Netzphasenwinkel ($\varphi_U$) aufweist und durch eine Netznennfrequenz gekennzeichnet ist,
    - das Einspeisen mittels eines Umrichters (105) erfolgt,

        - der Umrichter (105) einen Umrichterausgang zum Abgeben eines Ausgangsstromes aufweist, und
        - der Umrichter (105) stromprägend arbeitet, wobei

- das Einspeisen so erfolgt, dass ein Einspeisestrom von dem Umrichter (105) erzeugt wird mit einem mit der Netzfrequenz (f) umlaufenden Einspeisephasenwinkel ($\varphi_I$),

- zum Steuern des Einspeisephasenwinkels ($\varphi_I$) ein mit der Netzfrequenz (f) umlaufender Führungswinkel ($\varphi_L$) vorgegeben wird, wobei der Führungswinkel ($\varphi_L$) einen vorgebbaren Vorhaltewinkel ($\varphi_V$) in Bezug auf den Netzphasenwinkel ($\varphi_U$) aufweist, so dass der Führungswinkel ($\varphi_L$) dem Netzphasenwinkel ($\varphi_U$) um den Vorhaltewinkel ($\varphi_V$) nacheilt, und

- der Einspeisephasenwinkel ($\varphi_I$) dem Führungswinkel ($\varphi_L$) mit einer Verzögerungsdynamik nachgeführt wird, wobei

- die Verzögerungsdynamik so ausgebildet ist, dass

- im stationären Betrieb, wenn der Führungswinkel ($\varphi_L$) und der Netzphasenwinkel ($\varphi_U$) gleichförmig mit der Netzfrequenz umlaufen, ein Differenzwinkel ($\varphi_\Delta$) zwischen dem Einspeisephasenwinkel ($\varphi_I$) und dem Führungswinkel auf null ausgeregelt wird, und

- der Einspeisephasenwinkel ($\varphi_I$) in einem transienten Betrieb, wenn sich eine zeitliche Ableitung des Führungswinkels ($\varphi_L$) ändert, dem Führungswinkel mit einer veränderlichen Abweichung nachgeführt wird.

2. Verfahren nach Anspruch 1, **dadurch gekennzeichnet, dass**
der Vorhaltewinkel ($\varphi_V$) der Größe nach in Abhängigkeit von wenigstens einem Netzzustand vorgegeben wird.

3. Verfahren nach Anspruch 1 oder 2, **dadurch gekennzeichnet, dass**

- der Vorhaltewinkel ($\varphi_V$) gemäß wenigstens einer Einstellvorschrift eingestellt wird aus der Liste aufweisend folgende Vorschriften:

- der Vorhaltewinkel ($\varphi_V$) wird umso höher eingestellt je größer eine lokale Umrichterpenetration ist
- der Vorhaltewinkel ($\varphi_V$) wird umso größer gewählt, je kleiner eine mittlere Anlaufzeitkonstante des Netzabschnitts ist
- wenn der Netzabschnitt eine Exportzone oder Importzone bildet, wird der Vorhaltewinkel ($\varphi_V$) um wenigstens einen Grad höher eingestellt als wenn der Netzabschnitt keine Exportzone bzw. keine Importzone bildet,
- der Vorhaltewinkel ($\varphi_V$) wird in Abhängigkeit von der Netzfrequenz eingestellt,
- der Vorhaltewinkel ($\varphi_V$) wird umso größer gewählt, je höher die Netzfrequenz oberhalb eines vorbestimmten oberen Frequenzgrenzwertes liegt,
- der Vorhaltewinkel ($\varphi_V$) wird umso größer gewählt, je weiter die Netzfrequenz unterhalb eines vorbestimmten unteren Frequenzgrenzwertes liegt,
- der Vorhaltewinkel ($\varphi_V$) umso größer gewählt wird, je größer eine Änderung der Netzfrequenz ist, sobald sie dem Betrage nach oberhalb einer vorbestimmten oberen Frequenzänderungsgrenze liegt, und
- der Vorhaltewinkel ($\varphi_V$) umso größer gewählt wird, je größer eine Netzsensitivität ist, sobald sie oberhalb eines Sensitivitätsgrenzwertes liegt,
- der Vorhaltewinkel ($\varphi_V$) in seiner Größe, insbesondere dem Betrage nach im Bereich von 1° bis 30°, in Abhängigkeit von einem Kurzschlussstromverhältnis ausgewählt wird, insbesondere umso größer gewählt wird, je kleiner das Kurzschlussstromverhältnis ist,
- der Vorhaltewinkel ($\varphi_V$) in seiner Größe, insbesondere dem Betrage nach im Bereich von 1° bis 30°, in Abhängigkeit von wenigstens einer weiteren im elektrischen Versorgungsnetz (120) implementierten Systemdienstleistung anderer Einspeiser oder anderer Steuersysteme gewählt wird, insbesondere in Abhängigkeit wenigstens einer Systemdienstleistung, die als frequenzabhängige Leistungssteuerung ausgebildet ist.

4. Verfahren nach einem der vorstehenden Ansprüche, **dadurch gekennzeichnet, dass**

- der Führungswinkel ($\varphi_L$) am Umrichterausgang vorgegeben wird, und der Einspeisestrom am Umrichterausgang den Einspeisephasenwinkel ($\varphi_I$) aufweist,
- am Netzanschlusspunkt (118) ein Blindleistungsphasenwinkel vorliegt, der einen Phasenwinkel zwischen dem am Netzanschlusspunkt (118) eingespeisten Strom und der Netzspannung am Netzanschlusspunkt (118) bildet, wobei
- der Vorhaltewinkel ($\varphi_V$) zu dem Blindleistungsphasenwinkel mit einem abweichenden Wert vorgegeben wird.

5. Verfahren nach einem der vorstehenden Ansprüche, **dadurch gekennzeichnet, dass**

- der Vorhaltewinkel ($\varphi_V$) am Umrichterausgang und ein bzw. der Blindleistungsphasenwinkel am Netzanschlusspunkt (118) mit unterschiedlichen Werten vorgegeben werden, so dass sich ein Differenzwinkel ($\varphi_\Delta$) zwischen dem Vorhaltewinkel ($\varphi_V$) und dem Blindleistungsphasenwinkel ergibt, und
- wenigstens ein Spannungssteuerungsmittel zwischen dem Umrichterausgang und dem Netzanschlusspunkt (118) so eingestellt und/oder zugeschaltet wird, dass sich der Differenzwinkel ($\varphi_\Delta$) zwischen dem Umrichterausgang und dem Netzanschlusspunkt (118) ergibt.

6. Verfahren nach einem der vorstehenden Ansprüche, **dadurch gekennzeichnet, dass**

- wenigstens ein Spannungssteuerungsmittel vorgesehen ist, um die Netzspannung am Netzanschlusspunkt (118) zu verändern, und
- das Spannungssteuerungsmittel die Netzspannung so steuert, dass Spannungsabweichungen der Netzspannung am Netzanschlusspunkt (118) von einer vorgebbaren Sollspannung, bedingt durch Abweichungen zwischen dem Vorhaltewinkel und dem bzw. einem Blindleistungsphasenwinkel zumindest teilweise ausgesteuert oder ausgeregelt werden, und/oder
- das Spannungssteuerungsmittel in Abhängigkeit von dem Vorhaltewinkel ($\varphi_V$) eingestellt wird.

7. Verfahren nach einem der vorstehenden Ansprüche, **dadurch gekennzeichnet, dass**

- wenigstens ein bzw. das wenigstens eine Spannungssteuerungsmittel wenigstens ein Mittel ist, ausgewählt aus der Liste aufweisend:

    - eine Kondensatorbank mit einstellbaren Kapazitätswerten,
    - einen Stufentransformator und
    - eine Drossel.

8. Verfahren nach einem der vorstehenden Ansprüche, **dadurch gekennzeichnet, dass**

- die Verzögerungsdynamik eine Hauptzeitkonstante aufweist, und
- die Hauptzeitkonstante im Bereich von 10ms bis 100ms gewählt wird, wobei insbesondere
- die Verzögerungsdynamik als Verzögerungsfunktion 1. oder 2. Ordnung ausgebildet ist.

9. Verfahren nach einem der vorstehenden Ansprüche, **dadurch gekennzeichnet, dass**

- ein Betrieb, in dem der Einspeisephasenwinkel ($\varphi_I$) dem Führungswinkel ($\varphi_L$) mit der Verzögerungsdynamik nachgeführt wird, als Stützbetrieb vorgesehen ist, und
- der Stützbetrieb in Abhängigkeit von der Netzfrequenz und/oder dem Netzphasenwinkel ($\varphi_U$) aktiviert wird, insbesondere, dass der Stützbetrieb aktiviert wird, wenn

    - die Netzfrequenz oberhalb einer vorgebbaren Auslösefrequenz liegt,
    - die Netzfrequenz mit einem Frequenzgradienten steigt, der oberhalb eines vorgebbaren Auslösegradienten liegt, und/oder
    - die Netzphase um einen Wert springt, der oberhalb einer vorgebbaren Phasensprunghöhe liegt.

10. Einspeiser, insbesondere Windenergiesystem (100, 112), zum Einspeisen elektrischer Leistung in ein elektrisches Versorgungsnetz (120) an einem Netzanschlusspunkt (118), wobei

- der Netzanschlusspunkt (118) an einem Netzabschnitt des elektrischen Versorgungsnetzes (120) angeordnet ist und die elektrische Leistung über den Netzanschlusspunkt (118) in den Netzabschnitt eingespeist wird,
- das elektrische Versorgungsnetz (120) eine Netzspannung (U) mit einer Netzfrequenz (f) und einem mit der Netzfrequenz (f) umlaufenden Netzphasenwinkel ($\varphi_U$) aufweist und durch eine Netznennfrequenz gekennzeichnet ist,
- der Einspeiser wenigstens einen Umrichter (105) aufweist,

    - der Umrichter (105) einen Umrichterausgang zum Abgeben eines Ausgangsstromes aufweist, und
    - der Umrichter (105) stromprägend arbeitet, wobei

- eine Steuereinrichtung (103) vorgesehen ist, die dazu vorbereitet ist, das Einspeisen so zu steuern, dass

- ein Einspeisestrom von dem Umrichter (105) erzeugt wird mit einem mit der Netzfrequenz (f) umlaufenden Einspeisephasenwinkel ($\varphi_I$),
- zum Steuern des Einspeisephasenwinkels ($\varphi_I$) ein mit der Netzfrequenz umlaufender Führungswinkel ($\varphi_L$) vorgegeben wird, wobei der Führungswinkel ($\varphi_L$) einen vorgebbaren Vorhaltewinkel ($\varphi_V$) in Bezug auf den Netzphasenwinkel ($\varphi_U$) aufweist, so dass der Führungswinkel ($\varphi_L$) dem Netzphasenwinkel ($\varphi_U$) um den Vorhaltewinkel ($\varphi_V$) nacheilt, und
- der Einspeisephasenwinkel ($\varphi_I$) dem Führungswinkel ($\varphi_L$) mit einer Verzögerungsdynamik nachgeführt wird, wobei
- die Verzögerungsdynamik so ausgebildet ist, dass

- im stationären Betrieb, wenn der Führungswinkel ($\varphi_L$) und der Netzphasenwinkel ($\varphi_U$) gleichförmig mit der Netzfrequenz umlaufen, ein Differenzwinkel ($\varphi_\Delta$) zwischen dem Einspeisephasenwinkel ($\varphi_I$) und dem Führungswinkel ($\varphi_L$) auf null ausgeregelt wird, und
- der Einspeisephasenwinkel ($\varphi_I$) in einem transienten Betrieb, wenn sich eine zeitliche Ableitung des Führungswinkels ($\varphi_L$) ändert, dem Führungswinkel mit einer veränderlichen Abweichung nachgeführt wird.

**11.** Einspeiser nach Anspruch 10, **dadurch gekennzeichnet, dass**

- der Einspeiser, insbesondere die Steuereinrichtung, dazu vorbereitet ist, ein Verfahren nach einem der Ansprüche 1 bis 9 auszuführen.

Fig. 1

Fig. 2

Fig. 3

**Europäisches Patentamt**
**European Patent Office**
**Office européen des brevets**

# EUROPÄISCHER RECHERCHENBERICHT

Nummer der Anmeldung

EP 20 16 8873

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 073 631 A1 (SENVION GMBH [DE]) 28. September 2016 (2016-09-28) * Absätze [0001], [0003], [0008], [0016], [0017], [0027] - [0029]; Abbildungen 3,4,5 * | 1-11 | INV. H02J3/40 |
| | ----- | | |
| A | EP 3 496 227 A1 (SENVION GMBH [DE]) 12. Juni 2019 (2019-06-12) * Absätze [0031] - [0032], [0042] - [0048]; Abbildungen 1,4 * | 1,10 | |
| | ----- | | |
| A | CN 109 494 785 A (UNIV XIAN TECHNOLOGY) 19. März 2019 (2019-03-19) * Abbildungen 3-6 * | 1,10 | |
| | ----- | | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 8. Juni 2020 | Bergler, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 20 16 8873

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-06-2020

| Im Recherchenbericht angeführtes Patentdokument | Datum der Veröffentlichung | Mitglied(er) der Patentfamilie | Datum der Veröffentlichung |
|---|---|---|---|
| EP 3073631 A1 | 28-09-2016 | CN 106059416 A | 26-10-2016 |
| | | DE 102015003170 A1 | 15-09-2016 |
| | | DK 3073631 T3 | 19-08-2019 |
| | | EP 3073631 A1 | 28-09-2016 |
| | | ES 2742401 T3 | 14-02-2020 |
| | | PL 3073631 T3 | 31-01-2020 |
| EP 3496227 A1 | 12-06-2019 | CN 109888816 A | 14-06-2019 |
| | | DE 102017011235 A1 | 06-06-2019 |
| | | EP 3496227 A1 | 12-06-2019 |
| | | JP 6694494 B2 | 13-05-2020 |
| | | JP 2019103389 A | 24-06-2019 |
| | | KR 20190067097 A | 14-06-2019 |
| | | US 2019170117 A1 | 06-06-2019 |
| CN 109494785 A | 19-03-2019 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017129749 A1